# EUROPÄISCHE PATENTSCHRIFT

(11) **EP 1 797 298 B1**
(45) Veröffentlichungstag und Bekanntmachung des Hinweises auf die Patenterteilung: **04.05.2011**
(21) Anmeldenummer: 05778074.4
(22) Anmeldetag: 26.08.2005
(51) Int. Cl.: F02B 31/06, F02D 9/16, F16K 1/22

(54) **KLAPPEN-ANORDNUNG**
FLAP ARRANGEMENT
SYSTEME CLAPET

(30) Priorität: 30.08.2004 DE 102004041880
(43) Veröffentlichungstag der Anmeldung: 20.06.2007
(73) Patentinhaber: SAXONIA UMFORMTECHNIK GmbH, D-73037 Göppingen (DE)
(72) Erfinder: BOGENSCHÜTZ, Uwe, 73734 Esslingen (DE); BALTENSPERGER, Roger, 73265 Dettingen (DE); TÖPPEL, Alexander, 73035 Göppingen (DE)
(74) Vertreter: Alber, Norbert
(86) Internationale Anmeldenummer: PCT/EP2005/009249
(87) Internationale Veröffentlichungsnummer: WO 2006/024468

(56) Entgegenhaltungen:
- EP-A- 1 431 545
- US-A1- 2004 003 841
- PATENT ABSTRACTS OF JAPAN Bd. 2003, Nr. 12, 5. Dezember 2003 (2003-12-05) & JP 2004 060595 A (DENSO CORP), 26. Februar 2004 (2004-02-26)

## Beschreibung

### I. Anwendungsgebiet

Die Erfindung betrifft verstellbare Klappen in einem Strömungskanal.

### II. Technischer Hintergrund

Die Erfindung betrifft eine Klappen-Anordnung, insbesondere eine Tumbleklappen-Anordnung, wie sie im Ansaugtrakt eines Kraftfahrzeugverbrennungsmotors, insbesondere bei einem Direkteinspritzer, eingesetzt wird.

Möglichst nahe an den Einlassventilen des Motors, in der Regel untergebracht am Übergang zwischen Zylinderkopf und Saugrohr in einem separaten Flansch oder im Saugrohr integriert, wird in jedem Luftansaugkanal eine Tumbleklappe angeordnet, die um eine quer im Ansaugtrakt stehende Schwenkachse schwenkbar ist zwischen mindestens zwei verschiedenen Stellungen.

Dabei ist die eine Stellung in der Regel diejenige Stellung, in der die Klappenebene parallel zur Strömungsrichtung der Luft in dem Ansaugkanal steht und damit dem Luftstrom möglichst wenig Widerstand entgegensetzt, während in der anderen Stellung die Ebene der Tumbleklappe schräg zur Strömungsrichtung steht und eine Ablenkung der Luft im Ansaugkanal und damit auch stromabwärts des Einlassventils im Verbrennungsraum bewirkt.

Bei vollständig geöffneter Klappe kann die Klappe entweder in der Mitte des Strömungsquerschnitts angeordnet sein oder auch möglichst plan an einer der Wände des Ansaugkanales anliegen oder in einer dort ausgebildeten Tasche verschwinden, um die Strömung nicht zu behindern.

Der Zustand mit dem geringsten oder ohne Strömungswiderstand an der Klappe, der Homogenbetrieb, ist die normale Betriebsweise eines solchen Verbrennungsmotors.

In der Schrägstellung der Klappe wird durch die geänderten Strömungsverhältnisse eine walzenförmige Strömung der angesaugten Luft im Verbrennungsraum bewirkt - unterstützt von einer entsprechenden Gestaltung des Zylinderkopfes und/oder des Kolbenbodens - und in diesem Schichtladebetrieb, die für den Teillast- oder Geringlastbereich vorgesehen ist und von der Motorsteuerung automatisch angesteuert wird, ergibt sich eine deutliche Kraftstoffeinsparung, da dann das notwendige Kraftstoff: Luft-Verhältnis von λ1 = 14,7 zwar in dem Bereich um die Zündkerze herum vorliegt, in den weiter abliegenden Bereichen jedoch deutlich magerer, also mit geringerem Kraftstoffanteil, ist.

Da bei einem Verbrennungsmotor jeder Zylinder der in Reihe angeordneten Zylinder einen eigenen Ansaugkanal besitzt, muss auch jedem Zylinder eine eigene Tumbleklappe zugeordnet werden, wobei alle Klappen einer Reihe von Zylindern gemeinsam angesteuert werden sollen, um den mechanischen Aufwand für die Ansteuerung gering zu halten.

Deshalb sind alle Tumbleklappen untereinander miteinander verbunden und drehen gemeinsam um eine gemeinsame geometrische Schwenkachse.

Da die Funktion der Tumbleklappe auch die Sicherheit des Fahrzeuges beeinflusst, war es vorgeschrieben, dass die gesamte Tumble-Anordnung in Axialrichtung eine durchgehende Seele aus Stahl aufweisen muss.

Aus dem Dokument "PATENT ABSTRACTS OF JAPAN, Bd. 2003, Nr. 12, 5. Dezember 2003 (2003-12-05) & JP 2004 060595 A (DENSO CORP), 26. Februar 2004 (2004-02-26) sowie aus dem Dokument GB 2 393 219 A ist eine Klappenanordnung bekannt, bei der mehrere Schaufeln in jeweiligen Klappeneinsätzen angeordnet sind und an einer durchgehenden Welle drehfest befestigt sind. Die Welle ist in entsprechenden Lagerböcken der Klappeneinsätze drehbar gelagert. Die Welle ist in verschiedene Abschnitte unterteilt, nämlich einen Antriebsendewellenabschnitt, einen oder mehrere Zwischenwellenabschnitte und einen Endwellenabschnitt. Die Schaufeln sind aus Kunststoff hergestellt, während die Welle aus austenitischem rostfreien Stahl besteht.

### III. Darstellung der Erfindung

### a) Technische Aufgabe

Es ist daher die Aufgabe gemäß der Erfindung, eine Tumbleklappe sowie ein Verfahren zu ihrer Herstellung zur Verfügung zu stellen, welches trotz einfacher und kostengünstiger Herstellbarkeit und vor allem Montierbarkeit eine Anpassung an unterschiedliche Motorvarianten ermöglicht.

### b) Lösung der Aufgabe

Diese Aufgabe wird durch die Ansprüche 1 und 17 gelöst. Vorteilhafte Ausführungsformen ergeben sich aus den Unteransprüchen.

Durch die Ausbildung der Klappenanordnung aus metallenen Einzelteilen, insbesondere im Verlauf der Klappenanordnung durchgehend, wird eine hohe Festigkeit und Stabilität bei geringen Materialquerschnitten möglich, was unterstützt wird durch die einstückige Herstellung der Lagerböcke und insbesondere der gesamten Klappeneinsätze als einstückiges Teil, insbesondere als Spritzgussteil aus Kunststoff oder Druckgussteil aus Metall, wodurch ebenfalls die gewünschte Stabilität mit kleinen Materialquerschnitten und damit Gesamtabmessungen erreichbar ist.

Durch die Herstellung der Klappenanordnung aus U-förmigen Schaufeln einerseits und Wellenabschnitten andererseits kann für beide das jeweils optimale Ausgangsmaterial gewählt werden, nämlich im einen Fall ein Blechmaterial, im anderen Fall ein Rundmaterial (Vollmaterial oder rundes Rohr), so dass davon ausgehend nur noch geringe Bearbeitungsschritte an den Einzelteilen notwendig sind, nämlich bei den Schaufeln ein Stanz-Biegevorgang und bei den Zwischenwellen außer dem Ablängen auf die notwendige Länge lediglich ggf. noch - je nach Qualität des Ausgangsmaterials - eine Egalisierung der Oberfläche z.B. durch Drehen.

Dadurch dass die Zwischenwellen ebenso wie die Endwellen aus dem gleichen Rohmaterial bestehen, ist auch die Vorratshaltung an Rohmaterial begrenzt, wobei sich die Endwelle in der Regel nur durch ihre Länge von den Zwischenwellen unterscheidet, und die Antriebsendwelle zusätzlich durch einen Längsabschnitt mit unrundem Querschnitt, beispielsweise einer eingefrästen Abflachung des Querschnitts, um hier formschlüssig ein Antriebselement ansetzen zu können.

Je nach Platzverhältnissen in den Klappeneinsätzen sind die Wellen mit ihren Enden in umschlossenen Bohrungen oder Durchzügen der U-förmigen Schaufeln aufgenommen oder nur in halbkreisförmigen Vertiefungen. Der Durchmesser des Wellenmaterials beträgt dabei 3 mm bis 10 mm, insbesondere 5 mm bis 8 mm, während die Blechdicke für die Schaufeln 1 mm bis 3 mm, insbesondere 1,5 mm bis 2,5 mm, beträgt.

Vorzugsweise enden die Zwischenwellen jeweils an den Innenflächen der U-förmigen Schaufeln, in die sie mit ihren Enden eingesteckt sind, so dass keine über die Gesamtlänge der Klappenanordnung, also mehrere Schaufeln, durchgehende einzelne Welle vorhanden ist.

Durch diese Bauform wird weiterhin wegen der modularen Bauweise die Erstellung unterschiedlicher Klappenanordnungen für unterschiedliche Gegebenheiten, z. B. als Tumbleklappen-Anordnung für unterschiedlich konzipierte und unterschiedlich große Motorentypen ermöglicht, sondern vor allem auch die Montage vereinfacht und gleichzeitig die Stabilität der Lagerung der Wellen verbessert:
Indem die Klappenanordnung aus Einzelteilen zusammengesetzt ist, können die Schaufeln einerseits und Zwischenwellen andererseits erst in der gewünschten Endposition im Klappeneinsatz positioniert und danach miteinander verbunden, insbesondere verschweißt mittels z. B. eines Laserstrahles, werden, was dann natürlich von der zugänglichen Seite, also vom inneren der U-förmigen Schaufeln aus, erfolgt, da die andere Seite eng am Lagerbock anliegt.

Eine Verbindung der beiden Lagerhalbschalen des Lagerbockes des Klappeneinsatzes gegeneinander entfällt, und damit nicht nur ein wesentlicher Montageschritt, sondern auch ein wesentliches Stabilitätskriterium, denn die Qualität der Positionierung der Lagerhalbschalen gegeneinander und deren Verschraubung bestimmt maßgeblich die Lebensdauer der Klappenanordnung.

Bei einem einstückig hergestellten Spritzgussteil ist dies ohne Probleme mit der gewünschten Genauigkeit notwendig, und auch das Einspritzen von metallenen Muttern etc. in das Kunststoffteil kann entfallen.

Andererseits kann durch Einspritzen von Lagerungshülsen, beispielsweise aus Keramikmaterial für eine Welle aus Stahl, eine sehr hohe Lagerungsgenauigkeit sowie Lebensdauer der Gleitlagerpaarung erreicht werden.

Das Material des Lagerbocks, der in der Regel einstückig zusammen mit dem Klappeneinsatz gespritzt ist, besteht in der Regel aus Polyamid, in aller Regel aus verstärktem Polyamid. Die Verstärkung ist dabei so gewählt, dass Schwund und Temperaturdehnung des Kunststoffes in alle Richtungen gleich groß sind, insbesondere sind deshalb als Verstärkungsmaterial sphärische Körper, insbesondere Glaskugeln, verwendet.

Trotz der Beabstandung zur Schweißstelle von teilweise weniger als 1 mm ist es durch das Einstellen der Energie des Lasers und/oder Schweißzeit in Abstimmung mit Material und Dimensionierung der Schaufel einerseits und der darin zu verschweißenden Welle andererseits möglich, auf der dem Lagerbock zugewandten Seite die Erwärmung so zu steuern, dass eine Schädigung des Lagerbockes nicht stattfindet trotz erreichen der für die Verbindung der Schweißteile notwenigen Schweißtemperatur.

Bei der von der Innenseite der Schaufel, also dem Lagerbock abgewandten Seite der Schaufel her, stattfindenden Verschweißung wird die Einschweißtiefe so gesteuert, dass sie maximal 2 mm beträgt, aber dabei höchstens 90% der Dicke der Schaufel erreicht, so dass durch das Blechmaterial der Schaufel hindurch eine fast vollständige Verschweißung mit der Welle erzielt wird.

Andererseits jedoch ist die dabei an der Schaufel zugewandten Stirnfläche des Lagerbocks auftretende Temperatur geringer als die Schmelztemperatur des Materials des Lagerbockes. In der Regel werden sogar bereits auf der Außenseite der Schaufel die Temperaturen während der Verschweißung oder kurz danach niedriger liegen als die Schmelztemperatur des Kunststoffes.

Das Verschweißen mittels Laser geschieht dabei vorzugsweise so, dass der Laser selbst auf die Mitte der Stirnfläche der Welle gerichtet wird, und über einen oder mehrere Umlenkspiegel der Laserstrahl auf die ringförmige Kontaktfläche zwischen Wellenaußenumfang und Bohrung in der Schaufel gerichtet wird, so dass die Umlenkspiegel lediglich eine volle Umdrehung durchlaufen müssen, um diese Ringfläche zu verschweißen, was sehr schnell durchführbar ist.

Für den Zusammenbau werden daher z. B. die beiden Zwischenwellen, die beidseits an der Schaufel angreifen, durch die beiden Lagerböcke des entsprechenden Klappeneinsatzes geschoben, in den auch die Schaufel in der gewünschten Position, auch einer für die Montage definierten Drehlage, etwa der Normalposition im Homogenbetrieb des Motors, positioniert wird, so dass das freie Ende der Welle zunächst von außen durch den entsprechenden Lagerbock und anschließend die Bohrung bzw. den Durchzug im Endschenkel der Schaufel gesteckt wird, bis die vordere Stirnfläche der Welle plan mit der Innenseite der Schaufel abschließt, und in dieser Lage die Verbindung bzw. Verschweißung stattfinden kann.

Dabei kann es auch vorteilhaft sein, die Schaufeln nicht fluchtend zueinander, also in der gleichen Drehlage, vorzupositionieren für das Verschweißen, sondern unter leichter Verdrehung zueinander:
In einer bevorzugten Ausführungsform wird nämlich am von der Antriebsseite abgewandten Ende und insbesondere der dortigen Endwelle eine radial vorstehende Nase, beispielsweise in Form eines nockenförmigen, auf der Endwelle aufgeschweißten, Bleches, fixiert, die im Schichtladebetrieb, also bei in den Strömungskanal hineinragenden Tumbleklappen und damit Schaufeln, gegen einen Anschlag drückt, der vorzugsweise an dem letzten Einsatz ausgebildet ist. Natürlich kann zwecks übereinstimmender Gestaltung aller Einsätze als Spritzgussteil aus ein und derselben Form dieser Anschlag an allen Einsätzen vorhanden sein, ist dann an den übrigen Einsätzen jedoch funktionslos.

Wird nun mittels des Antriebselementes im Schichtladebetrieb diese Nase bzw. der Anschlagnocken gegen den Anschlag gedrückt, so kann die vom Antriebselement dabei aufgebrachte Kraft in Drehrichtung so bemessen werden, dass die Tumbleklappenanordnung dabei soweit tordiert wird, dass alle Schaufeln dabei die gleiche, zueinander fluchtende, Drehlage einnehmen. Insbesondere kann in dieser Drehlage bei jeder einzelnen Schaufel ein Anschlag direkt in dem Saugrohr vorhanden sein, beispielsweise in Form eines in Strömungsrichtung stehenden, quer über den Strömungskanal verlaufenden Bleches, gegen den die Vorderkante der Schaufel sich dabei unter Vorspannung anlegt. Ziel ist das Vermeiden von Klappergeräuschen in dieser Stellung.

Auf diese Art und Weise wird die Tumbleklappen.Anordnung fertiggestellt, indem alle Wellen und Schaufeln einer Tumbleklappenanordnung in einer entsprechenden Hilfsvorrichtung vorpositioniert und vorfixiert und anschließend Wellenenden und Schaufeln miteinander verschweißt werden. Diese Anordnung wird anschließend über die gesamte Klappenanordnung durchgehend in die entsprechenden Ausnehmungen des motorseitigen Endes des aus in der Regel Metallguss oder Kunststoff-Spritzguss bestehenden Saugrohr-Unterteil positioniert werden und Saugrohr-Oberteil zwischen Oberteil und Unterteil des Saugrohres gehalten werden.

Die Verklemmung erfolgt in Einschubrichtung der Klappeneinsätze formschlüssig aufgrund der äußeren Keilform der Klappeneinsätze, wozu auf den Außenseiten des in der Regel rechteckigen Strömungskanals des Einsatzes wenigstens in Längsrichtung verlaufende nach außen vorstehende Rippen vorhanden sind, die in Einschubrichtung konisch verlaufen und sich mit zunehmendem Einschieben im Innenumfang des Saugrohr-Unterteil verklemmen, gleichzeitig aber auch der Versteifung des Klappeneinsatzes dient.

Indem zumindest der Lagerbock des Klappeneinsatzes mit einer Toleranz des Lagerungs-Innendurchmessers von ≤ 100 µm, insbesondere ≤ 60 µm, hergestellt ist, sind Nachbearbeitungen am Spritzgussteil nach dem Ausformen bis auf ggf. das übliche Entgraten nicht mehr notwendig.

Vor oder nach dem Einsetzen der gesamten Klappenanordnung in das Saugrohr Unterteil wird auf die Antriebsendwelle die Antriebseinheit aufgeschoben und z. B. formschlüssig mit der Anflachung in der Antriebsendwelle verbunden, so dass nach Aufsetzen des so fertig montierten Saugrohr-Unterteil auf den Zylinderkopf des Motors nur noch das Antriebselement mit der Motorsteuerung gekoppelt werden muss.

Ein weiteres Problem bei derartigen Tumbleklappenanordnungen ist das Überströmen von Luft von einem Ansaugkanal zum nächsten über den im Saugrohr quer über alle Strömungskanäle durchgehenden Hohlraum, in den abschnittweise die Klappeneinsätze eingesteckt werden.

Um dieses Überströmen zu verhindern, sollen die Klappeneinsätze umlaufend dicht in der Quer-Ausnehmung sitzen.

Zu diesem Zweck weisen die Klappeneinsätze teilweise oder alle eine parallel zum Strömungskanal liegende, beispielsweise durch den Lagerbock oder daneben verlaufende, Dichtrippe auf, die beim Einschieben des Klappeneinsatzes in die quer verlaufende Ausnehmung des Saugrohres dort mit dem vorderen Ende als auch mit den Längskanten in eine entsprechend dimensionierte, U-förmig in der quer verlaufenden Ausnehmung umlaufende Dichtnut eintaucht. Die Dichtnut ist von ihrem Querschnitt her U-förmig mit zum freien Ende hin sich voneinander entfernenden Flanken oder V-förmig, allein schon wegen der Entformbarkeit dieses Gussteiles.

Damit trotz der auftretenden Maßtoleranzen sowohl beim Saugrohr als auch bei den Klappeneinsätzen eine über die U-förmig umlaufende Dichtnut dichte Anlage der Dichtrippe erreicht wird, ist auf wenigstens einer der Außenseiten, also quer zur Hauptebene der Dichtrippe abstehend, eine Umleg-Lippe mit einem dicht bzw. spitz auslaufenden Querschnitt am freien Ende ausgebildet, die vorzugsweise vom äußeren Rand der Dichtrippe zurückversetzt einstückig zusammen mit dieser hergestellt ist.

Beim Einschieben des Klappeneinsatzes und damit der Dichtrippe in die Dichtnut wird von der Flanke der Dichtnut diese Umleglippe umgelegt und dabei verformt, jedoch nicht unbedingt plastisch verformt, sondern aufgrund der Dimensionierung teilweise elastisch verformt.

Auf diese Art und Weise können auch bei anschließenden Relativbewegungen zwischen Platteneinsatz und Saugrohr aufgrund von Temperaturveränderungen die Umleglippen sich entlang der Flanke der Dichtnut weiter in diese hinein oder aus dieser herausbewegen, jedoch jeweils unter elastischer Verformung der Umleglippe und damit dichter Anlage der Umleglippe an der Flanke der Dichtnut.

Da die Umleglippe über alle drei Seiten - vorderes Ende sowie Seitenkanten der Dichtrippe - durchgeht, wird auf diese Art und Weise die quer verlaufende Ausnehmung jeweils zwischen zwei Strömungskanälen mindestens einmal in Querrichtung abgedichtet.

Zusätzlich kann für die Axialpositionierung ein Anschlagteil, beispielsweise eine Blechscheibe mit Durchlass, auf der mittleren Zwischenwelle verschweißt werden, und zwischen zwei entsprechenden Längsanschlägen, die beispielsweise im Saugrohr ausgebildet sind, gehalten werden. Dadurch werden Temperaturdehnungen der Tumbleklappe in Längsrichtung nicht über die gesamte Länge der Tumbleklappenanordnung aufsummiert, sondern nur über jeweils die halbe Länge.

### c) Ausführungsbeispiele

Ausführungsformen gemäß der Erfindung sind im Folgenden beispielhaft näher beschrieben. Es zeigen:
- Fig. 1:: eine Seitenansicht der Tumbleklappen-Anordnung ohne lagernde Lagerböcke und Klappeneinsätze,
- Fig. 2.: einen fertig montierten, einzelnen Klappeneinsatz,
- Fig. 3:: das montierte Endstück der Tumbleklappen-Anordnung an der An- triebsseite,
- Fig. 4:: die Schaufeln in Einzeldarstellung,
- Fig. 5:: die Tumbleklappen-Anordnung in verbautem Zustand, und
- Fig. 6:: einen Drehanschlag.

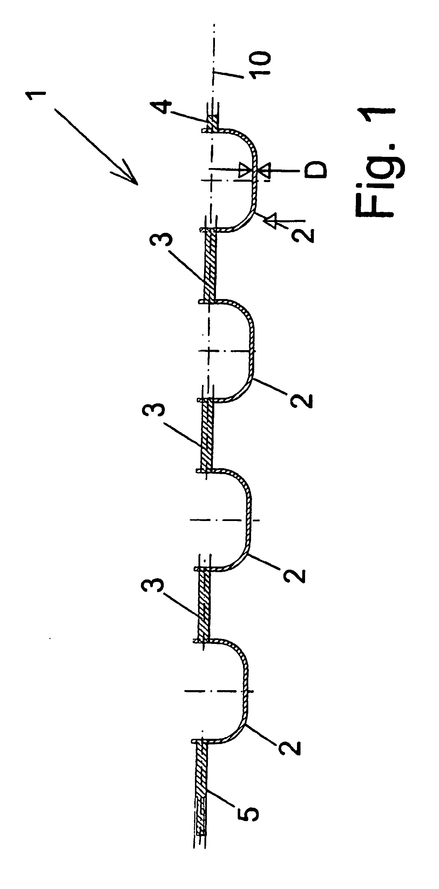

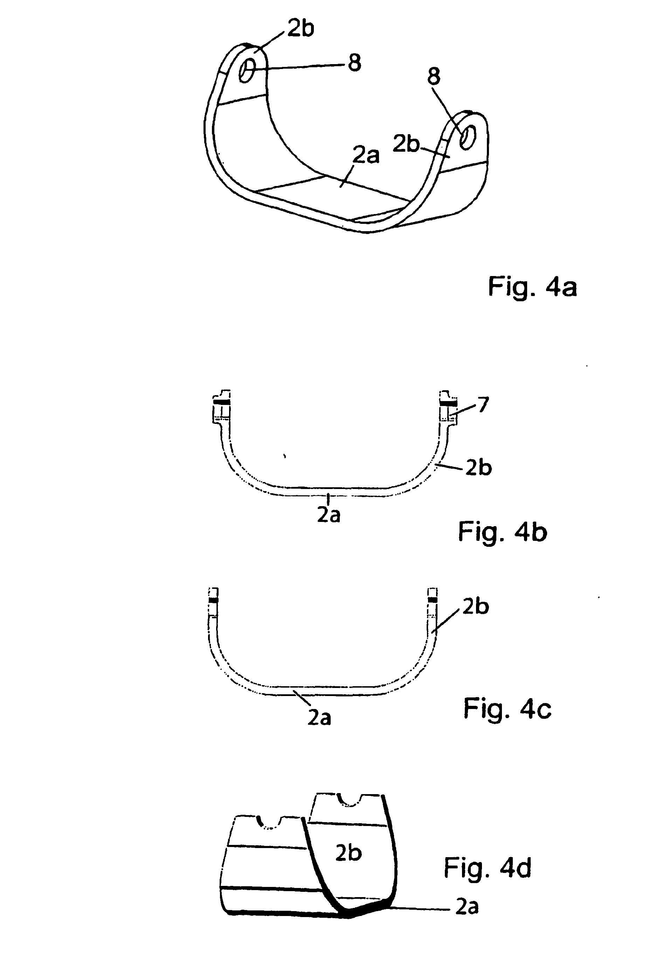

Fig. 1 zeigt die Tumbleklappen-Anordnung 1 in einer Blickrichtung quer zur Längsrichtung 10 mit Blickrichtung in der Ebene des mittleren Teils der Schaufeln, nämlich der eigentlichen Tumbleklappe 2a, wie am besten in Fig. 4a ersichtlich:
Denn die in der Blickrichtung der Fig. 1 U-förmigen Schaufeln sind aus einem Stahlblech ausgestanzt und U-förmig gebogen, so dass der mittlere Teil, der parallel zur Längsrichtung 10 verläuft, die spätere Tumbleklappe 2a bildet, während die davon abstrebenden Endschenkel 2b den Versatz der Tumbleklappe 2a quer zur Längsrichtung 10 ergeben.

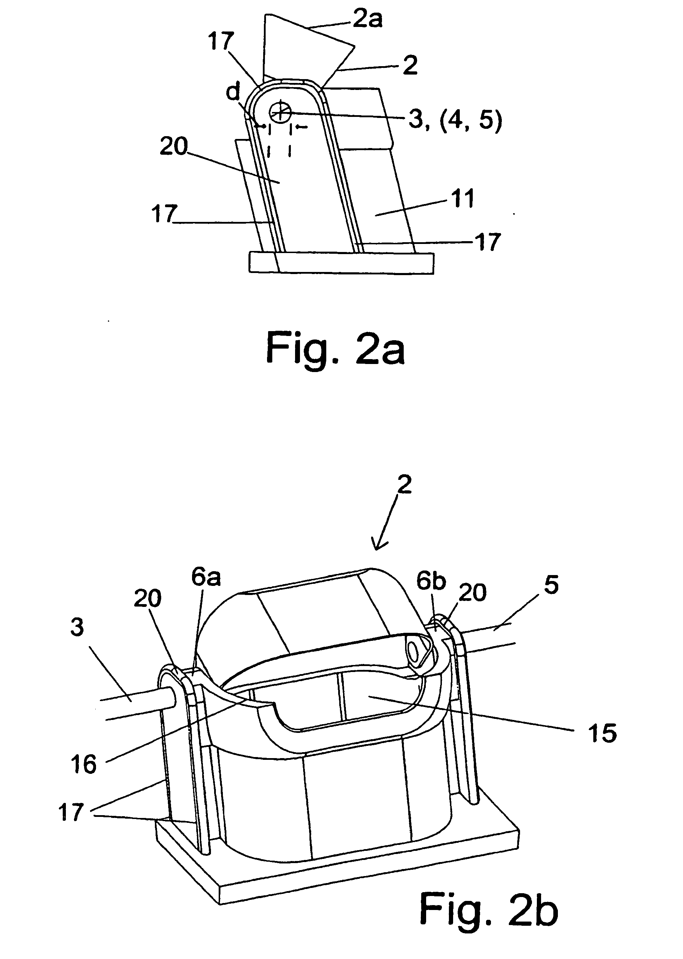

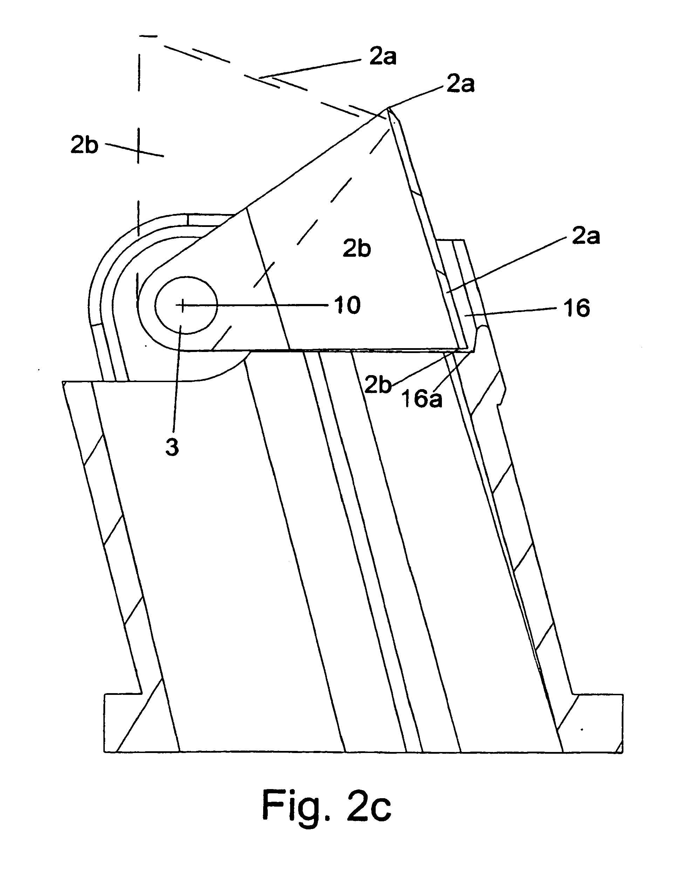

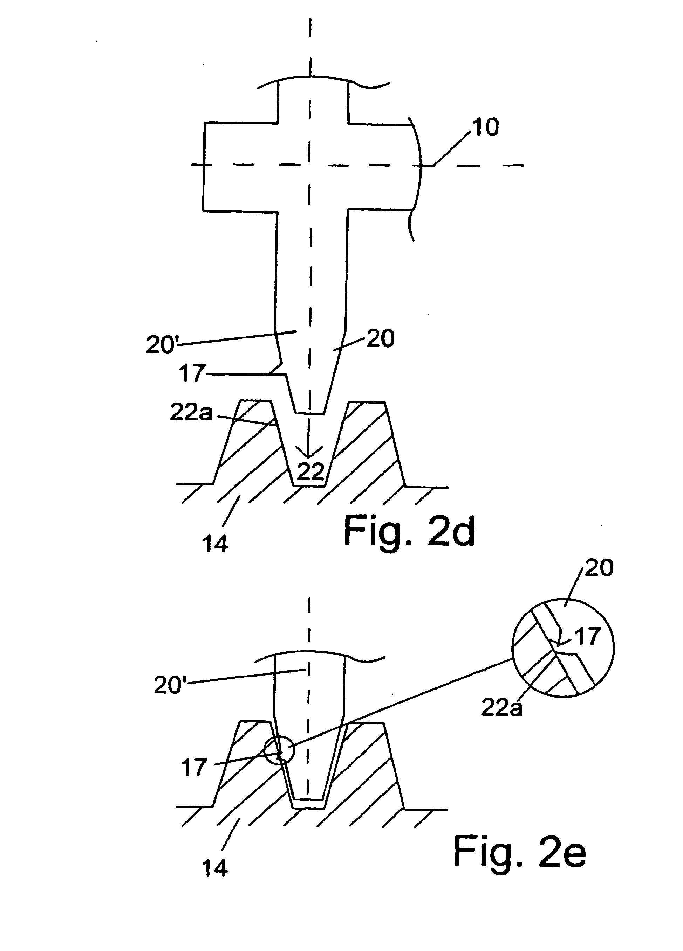

Dieser Versatz ist beabsichtigt, um trotz Lagerung der Tumbleklappen-Anordnung 1 etwa in der Mitte des Strömungskanals 15 (siehe Fig. 2) die gesamte U-förmige Schaufel in einer Drehlage parallel zur Wandung des Strömungskanals 15 anlegen und insbesondere in einer dortigen Tasche 16 positionieren zu können, so dass die gesamte Schaufel 2 in dieser Drehlage keinen oder einen so geringen Strömungswiderstand wie möglich im Strömungskanal 15 darstellt.

Da die Tumbleklappe 2a für eine ausreichende Wirkung eine definierte Breite besitzen muss, die Endschenkel 2b dagegen lediglich der Aufnahme der Wellen 3, 4, 5 dienen, verjüngen sich die Endschenkel 2b in der Regel vom mittleren Bereich aus zu ihren freien Enden hin, in denen sich eine Durchgangsöffnung in Form eines geprägten Durchzuges 7 oder einer einfachen Ausstanzung 8 bzw. einer Bohrung befinden zum Einstecken der Wellen, oder zum Einlegen der Wellen in die etwa halbrunde Ausnehmung am freien Ende der Schaufel gemäß Fig. 4d.

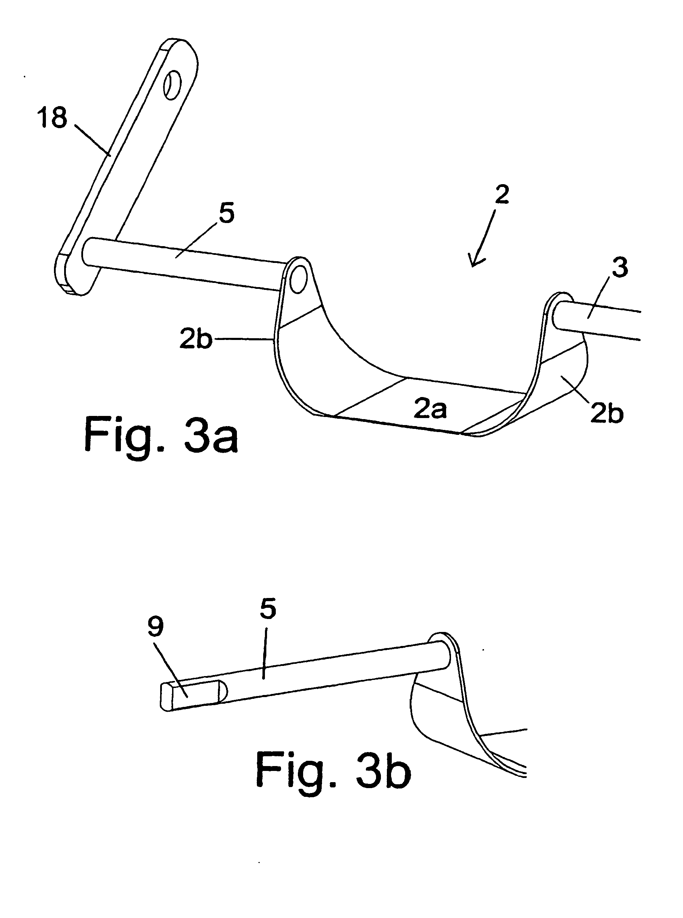

Von der fertig montierten, durchgehenden Tumbleklappen-Anordnung 1, von denen jeweils die von einer Schaufel 2 abstrebenden Wellen 3, 4, 5 in den beiden Lagerböcken 6a, b eines der vorzugsweise einzelnen Klappeneinsätze 11 gelagert sind, so dass über die Tumbleklappen-Anordnung 1 auch alle Klappeneinsätze 11 indirekt miteinander verbunden sind, zeigen die Fig. 2 den ersten Klappeneinsatz 11 mit der Antriebsendwelle 5, die an wenigstens einer Stelle eine Umfangs-Abflachung 9 besitzt zur Verbindung mit dem Antriebselement 18, wie es ohne umgebenden Klappeneinsatz 11 am besten in Fig. 3 zu erkennen ist.

Mit Hilfe des von einem Elektromotor oder einem Pneumatik-Antrieb betätigten Antriebselementes 18 wird somit die gesamte Tumbleklappen-Anordnung 1, also für eine Reihe von hintereinander stehenden Zylindern gemeinsam, zwischen der Normalstellung (möglichst kein Strömungswiderstand; Homogenbetrieb des Motors, Schaufel 2 durchgezogene Linien) und der Teillaststellung (in den Strömungskanal 15 eingeschwenkte Tumbleklappen 2a; Schichtladebetrieb, Schaufel 2 gestrichelt) hin und her verstellt, wie in der Schnittdarstellung der Fig. 2c ersichtlich.

Durch die erfindungsgemäße Konstruktion werden sowohl die Montage vereinfacht als auch die Abmessungen der Klappeneinsätze 11 verringert und dadurch der Bauraum des gesamten Motors als auch durch das Zusammensetzen aus einzelnen Schaufeln, Zwischenwellen und insbesondere auch Klappeneinsätzen ein modularer Aufbau unterschiedlich langer und unterschiedlich großer Tumbleklappenanordnungen erleichtert wird.

Durch die separate Herstellung der Schaufeln 2 einerseits und der Wellen 3, 4, 5 andererseits können jeweils passende Ausgangsmaterialien gewählt werden, also Rundmaterial (Vollwelle oder Rohr) für die Wellen und Blechmaterial für die Schaufeln jeweils aus Metall, insbesondere Stahl, während bei durchgängiger Herstellung aus einem gemeinsamen Rohteil zu diesem Zweck in die eine oder andere Richtung massive Umformungen erfolgen müssten.

Zusätzlich kann dabei der Durchmesser der Wellen 3, 4, 5 so gering gewählt werden, wie es für die Stabilität der Tumbleklappen-Anordnung eben ausreichend ist, und es muss nicht ein Flachmaterial entsprechend der Breite der Schaufeln 2 zu einem runden Außendurchmesser angefüllt werden, was insbesondere den Lagerdurchmesser im Lagerbock 6 massiv vergrößert.

Ferner wird - am besten anhand der Fig. 1 - auch klar, dass durch die separate Herstellung der Bauteile als Schaufeln 2 einerseits und Wellen 3, 4, 5 andererseits durch entsprechende Ablängung der Wellen und gegebenenfalls unterschiedliche Größen, insbesondere axiale Erstreckungen, der Schaufeln auf einfache Art und Weise verschiedene Tumbleklappen-Anordnungen für unterschiedliche Motoren, also mit unterschiedlichen Zylinderabständen und unterschiedlichen Gestaltungen und Abmessungen der Strömungskanäle im Saugrohr-Unterteil, mit den selben Vorrichtungen und Montageverfahren hergestellt werden können.

Zu diesem Zweck wird - wie am besten anhand der Fig. 2 verdeutlicht - jede Schaufel 2 einzeln in einer bestimmten Position, auch in einer bestimmten Drehlage, beispielsweise entsprechend der Normal-Position, in dem Klappeneinsatz 11 positioniert und anschließend die beiden daran angreifenden Wellen, am Beispiel der Fig. 2 die Endwelle 5 sowie die nächste Zwischenwelle 3, jeweils von der Außenseite des Lagerbockes 6b bzw. 6a aus durch diesen hindurch und in die Bohrung bzw. Ausstanzung 8 der Schaufel 2 hinein geschoben mittels einer Vorrichtung fluchtend zueinander gehalten und dort von der Innenseite der Schaufel 2, also von der Innenseite des Klappeneinsatzes 11 aus, mittels Laser verschweißt, ggf. auch verpresst oder verklebt.

Vorzugsweise wird diese Vorpositionierung über die gesamte Tumbleklappen-anordnung durchgehend mit allen Schaufeln und Wellen gleichzeitig durchgeführt, und anschließend die Verschweißung der einzelnen Schweißstellen, vorzugsweise nacheinander, in dieser Vorrichtung durchgeführt. Das Befestigen, insbesondere ebenfalls Verschweißen, der Anschlagnocke und/oder des Längsanschlages auf den entsprechenden Wellen erfolgt vorher separat.

Diese Vorgehensweise ermöglicht es weiterhin, dass der Lagerbock 6a bzw. b nicht wie sonst üblich aus zwei Lagerhalbschalen bestehen muss, die anschließend gegeneinander fixiert werden müssen, sondern die Lagerböcke 6a, b und insbesondere zusammen mit dem gesamten Klappeneinsatz 11 als einstückiges Kunststoff-Spritzgussteil hergestellt werden können, was den Aufwand an Formkosten als auch den nachfolgenden Montageaufwand sowie die Stabilität des Teils optimiert.

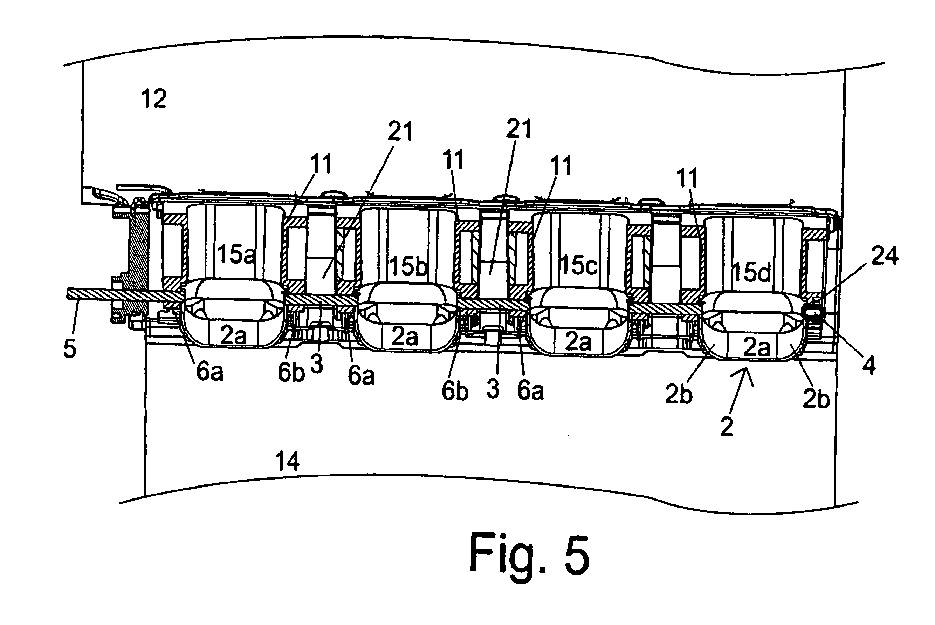

Die Figuren 2d und 2e zeigen - in Zusammenhang mit den Figuren 2a und 2b - die Abdichtung der quer verlaufenden Ausnehmung 21 (siehe Fig. 5) im Saugrohr-Unterteil (14) gegen Querströmungen.

Zu diesem Zweck läuft - wie am besten anhand der Figuren 2a und 2b zu erkennen - eine Dichtrippe 20 auf einer Seite des Strömungskanals 15 quer zur Längsrichtung 10 auf der Außenseite des Klappeneinsatzes 11 um, vorzugsweise an einer Längsposition im Bereich des einen Lagerbockes 6.

Die Dichtrippe 20 beginnt am unteren Ende des Einsatzes 11 und verläuft von dort zum oberen Ende, an dem sich der Lagerbock 6 befindet, über den dortigen vorderen Bereich hinweg und U-förmig oder V-förmig hinweg zurück zum unteren Ende.

Wie besser in der Schnittdarstellung durch diese Dichtrippe 20 der Figuren 2d und 2e zu erkennen, ist auf einer Seitenfläche der Dichtrippe 20, von deren vorderem freien Ende etwas zurückversetzt und damit quer zur Hauptebene 20' der Dicht-rippe 20 abstehend und ebenfalls über die beschriebenen drei Seiten umlaufend eine Umleglippe 17 ausgebildet.

Die Dichtrippe 20 taucht beim Einschieben des Klappeneinsatzes 11 in den dafür vorgesehenen Abschnitt der quer verlaufenden Ausnehmung 21 des Saugrohrunterteiles 14 mit ihrem freien vorderen Rand - der vorzugsweise konisch zulaufend ausgebildet ist - in einem Querschnitt ebenfalls konisch geformte Dichtnut 22 ein, in der sie jedoch ohne die Umleglippe 17 aufgrund von Herstellungsungenauigkeiten, ungleichmäßiger Temperaturen usw. im Betrieb des Motors nicht dicht genug anliegen würde.

Die Umleglippe 17 ist zusammen mit den Abmessungen der Rippe 20 und der Nut 22 so bemessen, dass beim Einschieben der Rippe 20 in die Nut 22 die Umleg-Lippe 17 an der entsprechenden Flanke 22a der Nut 22 anliegt und von dieser umgebogen, also umgelegt, und dabei elastisch verformt und geringfügig auch zwischen der Flanke 22a und der Dichtrippe 20 verpresst wird.

Dadurch, dass diese Verformung der Umleglippe 17 eine wenigstens teilweise elastische Verformung ist, wird auch bei später, nach der Montage des Platteneinsatzes 11, auftretende Relativbewegungen zwischen Rippe 20 und Nut 22 aufgrund Temperaturänderung etc. die Umleglippe 17 an der Flanke 22a dicht anliegen, und zwar über alle drei Seiten durchgehend, über welche sich die Dichtrippe 20 erstreckt.

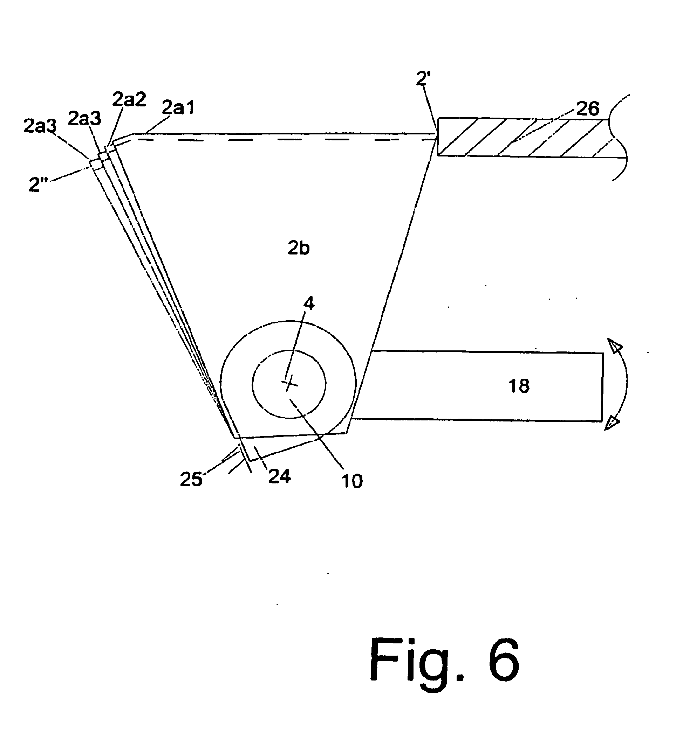

Die Fig. 6 zeigt von der Seite der Endwelle 4 her betrachtet die in Form eines durchbohrten Blechstückes auf dem der Endwelle 4 aufgeschweißte Anschlagnocke 24, die mit einer ihrer Anschlagflächen aufgrund Drehung im Uhrzeigersinn an einem Anschlag 25 anliegt, der vorzugsweise an dem letzten Klappeneinsatz 11 ausgebildet ist.

Dabei befinden sich die Schaufeln 2 in diesem Fall in der Schichtlageeinstellung, in der die Tumbleklappen 2a jeweils an einem Schaufelanschlag 26 anliegen sollen.

Fig. 5 zeigt in einer Ansicht quer zur Längsrichtung 10 der Tumbleklappen-Anordnung den Endzustand, in dem die teilgeschnitten dargestellte Tumbleklappen-Anordnung 1 samt aller Klappeneinsätze 11 zwischen Ansaugrohr 14 und Saugrohr-Oberteil 12 montiert sind.

Der Saugrohr-Unterteil 14 weist zu diesem Zweck in Reihe hintereinander entsprechende Strömungskanäle 15'a, b... entsprechend dem Abstand und der Anzahl der Klappeneinsätze 11 der Anordnung 1 auf, und kann - z.B. bei einem V-Motor - zwei solcher Linien für die beiden Zylinderreihen nebeneinander aufweisen.

Am unteren freien Ende sind diese Strömungskanäle 15' a, b so aufgeweitet und dimensioniert, dass in jedem davon ein Klappeneinsatz 11 der fertig montierten Tumbleklappen-Anordnung gemäß Fig. 2 mit dem Ende, an dem sich der Lagerbock 6a, b befindet, voran hineingeschoben wird und sich dort mittels der am Außenumfang des Klappeneinsatzes 11 vorstehenden, sich vom vorderen Ende der Lagerböcke 6 aus nach hinten konisch erweiternden, Rippen 19 verspreizt, die zumindest der Grob-Positionierung in der Ausnehmung des Saugrohres dienen. Anschließend wird auf diese von den Lagerböcken 6 angewandte Rückseite der eingesteckten Klappeneinsätze 11 der Saugrohr-Oberteil 12 aufgesetzt und gegen den Saugrohr-Unterteil 14 verschraubt und dadurch die Tumbleklappen-Anordnung 1 fest dazwischen gehalten.

Das so fertig montierte Saugrohr-Unterteil kann anschließend auf die Oberseite des Verbrennungsmotors, nämlich des Zylinderkopfes, aufgesetzt und gegen diesen verschraubt werden, wofür die von oben nach unten durchgehenden und beidseits offenen Schraubkanäle 17 der einzelnen Klappeneinsätze 11 dienen. Fig. 6 zeigt jedoch die Anlage des Nockens 24 am Anschlag 25 ohne Kraft, also im entlasteten Zustand der Tumbleklappenanordnung. Dabei ist sichtbar, dass die einzelnen Tumbleklappen 2a1, 2a2, ... eine geringfügig voneinander abweichende Drehlage bezüglich der Schwenkachse 10 der Welle einnehmen.

Erst wenn der Nocken 24 mit zunehmender Kraft gegen den Anschlag 25 drückt, tordiert die Tumbleklappenanordnung zunehmend, bis bei einer definierten Kraft gegen den Anschlag 25 sich alle Schaufeln 2a1, 2a2, ... fluchtend in einer Reihe hintereinander in Blickrichtung der Schwenkachse 10 befinden und damit auch alle Vorderkanten 2' der Schaufeln 2, und vorzugsweise auch mit der gleichen Vorspannkraft, gegen Ihren jeweiligen, in Fig. 6 fluchtend hintereinander angeordneten, Schaufelanschlägen 26 drücken.

Es muss daher sichergestellt werden, dass in der gewünschten Einstellung, in diesem Fall der Schichtlade-Einstellung, mittels des Antriebselements 18 ein solches definiertes Drehmoment auf die Tumbleklappenanordnung übertragen wird, dass der Nocken 24 mit der exakt benötigten Kraft gegen den Anschlag 25 drückt.

In Gegenrichtung, also bei Drehung gegen den Uhrzeigersinn, liegt für die Homogeneinstellung der Tumbleklappenanordnung der Anschlagnocken 24 mit einer anderen Flanke an dem zweiten Anschlag 25' an.

### BEZUGSZEICHENLISTE

- 1: Tumbleklappen-Anordnung
- 2: Schaufel
- 2': Vorderkante
- 2": Hinterkante
- 2a: Tumbleklappe
- 2b: Endschenkel
- 3: Zwischenwelle
- 4: Endwelle
- 5: Antriebs-Endwelle
- 6: Lagerbock
- 7: Durchzug
- 8: Ausstanzung
- 9: Abflachung
- 10: Längsrichtung, Schwenkachse
- 11: Klappeneinsatz
- 12: Saugrohr-Oberteil
- 13: Zylinderkopf
- 14: Saugrohr-Unterteil
- 15: Strömungskanal
- 16: Tasche
- 16a: Anschlagfläche
- 17: Umleg-Lippe
- 18: Antriebselement
- 19: Rippen
- 20: Dicht-Rippe
- 21: querverlaufende Ausnehmung
- 22: Dichtnut
- 22a: Flanke
- 23: Hauptebene
- 24: Anschlag-Nocke
- 25, 25': Anschlag
- 26: Schaufel-Anschlag

- d: Durchmesser
- D: Dicke

## Patentansprüche

1. Klappenanordnung, insbesondere Tumble-Klappenanordnung mit mehreren Schaufeln (2), die die Tumbleklappen (2a) enthalten, und mehreren Zwischenwellen (3) sowie einer Endwelle (4) und einer Antriebsendwelle (5), wobei wenigstens die Zwischenwellen (3) in Lagerböcken (6) der Klappeneinsätze (11) gelagert sind, und wobei die Zwischenwellen (3), die Endwelle (4) und die Antriebsendwelle (5) aus Metall, insbesondere aus Stahl, bestehen,
**dadurch gekennzeichnet, dass**
- auch die Schaufeln (2) aus Metall, insbesondere aus Stahl, bestehen und die Schaufeln (2) sowie Zwischenwellen (3), Endwelle (4) und Antriebsendwelle (5) fest miteinander verbunden, insbesondere verschweißt sind, und
- die Lagerböcke (6) der Klappeneinsätze (11) als einstückige, die Lagerstelle ohne Trennfuge umschließende, Lagerböcke (6) ausgebildet sind.

2. Klappenanordnung nach Anspruch 1,
**dadurch gekennzeichnet, dass**
die Lagerböcke (6a, 6b) aus Kunststoff bestehen und als Kunststoff-Spritzgussteil, insbesondere einstückig zusammen mit dem gesamten Klappeneinsatz (11), ausgebildet sind.

3. Klappenanordnung nach einem der vorhergehenden Ansprüche, **dadurch gekennzeichnet, dass**
die Schaufeln (2) in der Seitenansicht betrachtet U-förmig sind mit einem mittleren Bereich, der die Tumbleklappe (2a) darstellt, und den von dort abstrebenden frei endenden Endschenkeln (2b), und insbesondere die gesamte Schaufel (2) aus einem Blechmaterial insbesondere konstanter Dicke besteht.

4. Klappenanordnung nach einem der vorhergehenden Ansprüche, **dadurch gekennzeichnet, dass**
die Zwischenwellen (3) identisch, insbesondere auch gleich lang, ausgebildet sind und aus einem massiven oder hohlen Rundmaterial, insbesondere mit gezogener oder geschliffener Oberfläche insbesondere der Passung 48 oder 49, bestehen.

5. Klappenanordnung nach einem der vorhergehenden Ansprüche, **dadurch gekennzeichnet, dass**
die Endwelle (4) aus dem gleichen Rundmaterial wie die Zwischenwelle (3), lediglich, mit geringerer Länge, hergestellt ist.

6. Klappenanordnung nach einem der vorhergehenden Ansprüche, **dadurch gekennzeichnet, dass**
die Antriebsendwelle (5) aus dem gleichen Rundmaterial wie die Zwischenwelle (3) hergestellt ist, und in einem definierten Längsabschnitt wenigstens einen unrunden Querschnitt, insbesondere wenigstens eine Abflachung (9) aufweist.

7. Klappenanordnung nach einem der vorhergehenden Ansprüche, **dadurch gekennzeichnet, dass**
die Enden der Zwischenwellen (3) bzw. Endwellen (4, 5) in umschließenden Bohrungen (8) oder Durchzügen (7) der Schaufeln (2) aufgenommen sind oder in den Enden der freien Endschenkel (2b) aufgenommen sind.

8. Klappenanordnung nach einem der vorhergehenden Ansprüche, **dadurch gekennzeichnet, dass**
- der Durchmesser (d) der Zwischenwellen (3) bzw. Endwellen (4, 5) bei Vollmaterial zwischen 3 mm und 10 mm, insbesondere zwischen 5 mm und 8 mm, beträgt, oder insbesondere
- die Dicke (D) des Blechmaterials der Schaufeln (2) zwischen 1 mm und 3 mm, insbesondere zwischen 1,5 und 2,5 mm, beträgt.

9. Klappenanordnung nach einem der vorhergehenden Ansprüche, **dadurch gekennzeichnet, dass**
zwischen den einzelnen Schaufeln (2) separate Zwischenwellen (3) vorhanden sind, die nicht über den Längsbereich der Schaufeln (2) durchgehen, sondern spätestens an der Innenfläche der Schaufeln (2) enden.

10. Klappenanordnung nach einem der vorhergehenden Ansprüche, **dadurch gekennzeichnet, dass**
die Klappeneinsätze (11) wenigstens auf einer Seite neben dem Strömungskanal (15) eine Dichtrippe (20) aufweisen, die quer zur Längsrichtung (10), der Richtung der Wellen (3, 4, 5), steht und über das vordere Ende als auch die beiden in Einschubrichtung verlaufenden, parallelen Seiten durchgeht und im Saugrohr, insbesondere im Saugrohrunterteil (14), jeweils eine analog U-förmig umlaufende Dichtnut (22) zur Aufnahme der Dichtrippe (20) ausgebildet ist.

11. Klappenanordnung nach Anspruch 10,
**dadurch gekennzeichnet, dass**
die Dichtrippe an der Längsposition nahe dem einen Ende des Klappeneinsatzes (11), insbesondere im Längsbereich des Lagerbockes (6), ausgebildet ist und eine Breite aufweist, die geringer ist als die Breite des Klappeneinsatzes (11), betrachtet in Längsrichtung (10) der Wellen.

12. Klappenanordnung nach einem der vorhergehenden Ansprüche, **dadurch gekennzeichnet, dass**
quer zur Hauptebene (23) der U-förmig umlaufenden Dichtrippe (20) abstehend und ebenfalls über die gesamten drei Seiten wie die Dichtrippe (20) durchgehend eine Umleglippe (17) über die Seitenfläche der Dichtrippe (20) vorsteht, die insbesondere einen spitz bzw. dünn frei auslaufenden Querschnitt besitzt und so dimensioniert ist, dass beim Einschieben der Dichtrippe (20) in die Dichtnut (22) sich die Umleglippe (17) unter wenigstens teilweise elastischer Verformung dicht an der einen Flanke (22a) der Dichtnut (22) anlegt.

13. Klappenanordnung nach einem der vorhergehenden Ansprüche, **dadurch gekennzeichnet, dass**
die Umleglippe (17) einstückig zusammen mit der Dichtrippe (20) und damit des gesamten Klappeneinsatzes (11) und insbesondere aus dem gleichen Material ausgebildet ist.

14. Klappenanordnung nach einem der vorhergehenden Ansprüche, **dadurch gekennzeichnet, dass**
am Ende der Klappenanordnung, insbesondere auf der Endwelle (4), ein Anschlag-Nocken (24) drehfest fixiert, insbesondere in Form eines Blechteiles aufgesteckt und verschweißt, ist, welches bei Drehung der Endwelle insbesondere in Richtung Schichtladebetrieb des Motors, gegen einen Anschlag (25) drückt, der im Saugrohr, insbesondere im Klappeneinsatz (11), ausgebildet ist.

15. Klappenanordnung nach einem der vorhergehenden Ansprüche, **dadurch gekennzeichnet, dass**
im entlasteten Zustand der Tumbleklappenanordnung die einzelnen Schaufeln (2) definiert voneinander abweichende Drehlagen bezüglich der Schwenkachse (10) zueinander einnehmen und erst bei Einwirken eines definierten Drehmomentes mittels des Antriebselementes (18) und anliegend des am anderen Ende der Anordnung vorhandenen Anschlagnockens (24) gegen den Anschlag (25) die Tumbleklappenanordnung soweit tordiert ist, dass die Schaufeln alle die gleiche Drehlage bezüglich der Schwenkachse (10) einnehmen und insbesondere mit definierter Anpresskraft gegen einen Schaufel-Anschlag (26) drücken.

16. Klappenanordnung nach einem der vorhergehenden Ansprüche, **dadurch gekennzeichnet, dass**
der Schaufelanschlag (26) aus einem in Strömungsrichtung verlaufenden, quer über den Strömungskanal (15) sich erstreckenden Blech besteht, welches insbesondere im Saugrohr-Unterteil (14) angeordnet ist.

17. Verfahren zum Herstellen einer Tumbleklappen-Anordnung (1) mit wenigstens einer Schaufel (2), die eine Tumbleklappe (2a) umfasst und die in einem Paar Lagerböcke (6a, 6b) wenigstens eines Klappeneinsatzes (11) gelagert ist,
wobei
- die jeweilige Schaufel (2) in dem Strömungskanal (15) des jeweiligen Klappeneinsatzes (11) definiert positioniert wird,
- die an dieser Schaufel (2) angreifende Zwischenwelle (3) und Endwellen (4) oder die an dieser Schaufel (2) angreifenden Zwischenwellen (3, 3) oder die an dieser Schaufel (2) angreifende Zwischenwelle (3) und Antriebsendwelle (5) jeweils von außen durch den jeweiligen Lagerbock (6a, 6b) des Klappeneinsatzes (11) axial bis zur Schaufel (2) durchgeschoben werden, und
- die Schaufel (2) mit den diese kontaktierenden Zwischenwellen (3) bzw. End- und Antriebswellen (4, 5) fest verbunden werden.

18. Verfahren nach einem der vorhergehenden Verfahrensansprüche, **dadurch gekennzeichnet, dass**
das Verbinden ein Verschweißen, insbesondere mittels Laser, ist und das Verschweißen von der Innenseite der Schaufel (2) und damit vom Strömungskanal (15) her erfolgt.

19. Verfahren nach einem der vorhergehenden Verfahrensansprüche, **dadurch gekennzeichnet, dass**
das Einstellen der Energie des Lasers und/oder der Schweißzeit in Abstimmung mit der Dicke (D) der Schaufel (2) im Schweißbereich sowie der Materialien der Schaufel (2) und der Zwischenwelle (3) bzw. der Endwellen (4, 5) so abgestimmt wird, dass die Erwärmung auf der Außenseite der Schaufel (2) im Kontaktbereich zwischen Schaufel (2) und Welle (3, 4, 5) das Material des Lagerbockes (6a, b) nicht schädigt.

20. Verfahren nach einem der vorhergehenden Verfahrensansprüche, **dadurch gekennzeichnet, dass**
die Wellen (3, 4, 5) gegen die Schaufel (2) vorwärts geschoben werden, bis ihre vordere Stirnfläche parallel zur Innenseite der Schaufel (2) liegt.

21. Verfahren nach einem der vorhergehenden Verfahrensansprüche, **dadurch gekennzeichnet, dass**
das Verbinden bzw. Verschweißen in einer Drehlage der Schaufel (2) parallel bzw. in der Wandung des Strömungskanals (15) geschieht, also in der Klappenstellung für den Homogenbetrieb.

22. Verfahren nach einem der vorhergehenden Verfahrensansprüche, **dadurch gekennzeichnet, dass**
die Verbindung der Schaufeln (2) mit den daran angrenzenden Wellen (3, 4, 5) an einem Ende der Tumbleklappen-Anordnung (1) beginnend von einer Schaufel (2) zur nächsten fortgesetzt wird und insbesondere mit der Antriebsendwelle (5) und dem dortigen Aufsetzen des Antriebselementes (18) endet.

23. Verfahren nach einem der vorhergehenden Verfahrensansprüche, **dadurch gekennzeichnet, dass**
wenigstens die Lagerböcke (6), insbesondere jeweils ein gesamter Klappeneinsatz (11) mit zwei daran angeordneten Lagerböcken (6a, b), einstückig als Kunststoff-Spritzgussteil hergestellt wird und dabei insbesondere die Toleranz des Durchmessers (d') der Lagerbohrung im Lagerbock (6) ≤100 µm, insbesondere ≤ 30 µm ist.

24. Verfahren nach einem der vorhergehenden Verfahrensansprüche, **dadurch gekennzeichnet, dass**
- der Lagerbock (6) und/oder der Klappeneinsatz (11) aus Glasfaser-verstärktem Kunststoff, insbesondere Glasfaser-verstärktem Polyamid, hergestellt wird, oder insbesondere
- die Wellen (3, 4, 5) aus massivem Rundmaterial oder Rohrmaterial, insbesondere Stahl-Rundmaterial, hergestellt werden sowie mit Ablängen auf die gewünschten Einzellängen, abhängig vom Abstand der einzelnen Zylinder.

25. Verfahren nach einem der vorhergehenden Verfahrensansprüche, **dadurch gekennzeichnet, dass**
die U-förmigen Schaufeln (2) als Stanzbiegeteil aus einem Blech gleichmäßiger Blechdicke hergestellt werden und die Durchgangsöffnung für das Einsetzen der Welle (3, 4, 5) als Durchzug (7) oder als einfache Ausstanzung bzw. Bohrung (8) hergestellt wird.

26. Verfahren nach einem der vorhergehenden Verfahrensansprüche, **dadurch gekennzeichnet, dass**
in der Antriebsendwelle (5) zusätzlich wenigstens eine Abflachung (9) des runden Querschnitts an wenigstens einer Stelle eingearbeitet, insbesondere eingepresst oder eingefräst, wird, zur drehfesten Verbindung mit einem Antriebselement (18) mittels Formschluss.

## Claims

1. A flap arrangement, in particular a tumble flap arrangement, with plural blades (2) including the tumble flaps (2a), plural intermediary shafts (3) and a terminal shaft (4) and a terminal drive shaft (5), wherein at least the intermediary shafts (3) are supported in support blocks (6) of the flap inserts (11), and wherein the intermediary shafts (3), the terminal shaft (4) and the terminal drive shaft (5) are made from metal, in particular steel, wherein
- the blades (2) are also made from metal, in particular steel, and the blades (2) and the intermediary shafts (3), the terminal shaft (4) and the terminal drive shaft (5) are fixated to one another, in particular welded; and
- the bearing blocks (6) of the flap inserts (11) are configured as integral one piece bearing blocks (6) enclosing a bearing without a separation gap.

2. The flap arrangement according to claim 1, wherein the bearing blocks (6a, 6b) are made from plastic and are configured as injection molded components, in particular configured integral in one piece with the entire flap insert (11).

3. The flap arrangement according to one of the preceding claims, wherein the blades (2) are configured U-shaped in a lateral view with a center portion forming the tumble flap (2a), and the end arms (2b) protruding there from freestanding, and in particular the entire blade (2), are made from sheet metal, in particular with constant thickness.

4. The flap arrangement according to one of the preceding claims, wherein the intermediary shafts (3) are configured identical, in particular also with equal length, and are made from a solid or hollow round stock, in particular with a drawn or ground surface, in particular with a fit (48 or 49).

5. The flap arrangement according to one of the preceding claims, wherein the terminal shaft (4) is made from the same round stock as the intermediary shaft (3), but with less length.

6. The flap arrangement according to one of the preceding claims, wherein the terminal drive shaft (5) is made from the same round stock as the intermediary shaft (3), and includes at least one non-circular cross section in a defined longitudinal section, in particular at least one flat area (9).

7. The flap arrangement according to one of the preceding claims, wherein the ends of the intermediary shafts (3) or the terminal shafts (4, 5) are received in enclosing bore holes (8) or pass-throughs (7) of the blades (2), or in the ends of the free terminal arms (2b).

8. The flap arrangement according to one of the preceding claims, wherein
- a diameter (d) of the intermediary shafts (3) or terminal shafts (4, 5) is between 3 mm and 10 mm for solid stock, in particular between 5 mm and 8 mm, or
- in particular the thickness (D) of the sheet metal for the blades (2) is between 1 mm and 3 mm, in particular between 1.5 and 2.5 mm.

9. The flap arrangement according to one of the preceding claims, wherein separate intermediary shafts (3) are provided between the particular blades (2), wherein the intermediary shafts (3) do not extend continuously over the longitudinal portion of the blades (2), but terminate at the latest at the inner surfaces of the blades (2).

10. The flap arrangement according to one of the preceding claims, wherein the flap inserts (11) include a seal rib (20) at least on one side adjacent to the flow channel (15), wherein the seal rib (20) extends transversal to a longitudinal direction (10) of the shafts (3, 4, 5) and extends continuously over the front end and also over the two parallel sides extending in insertion direction, and a respective analogously U-shaped circumferential seal groove (22) for receiving the seal rib (20) is configured in the suction tube, in particular in the lower portion (14) of the suction tube.

11. The flap arrangement according to claim 10, wherein the seal rib is configured at the longitudinal position proximal to a first end of the flap insert (11), in particular in the longitudinal portion of the bearing block (6), and has a width, which is less than a width of the flap insert (11) viewed in the longitudinal direction (10) of the shafts.

12. The flap arrangement according to one of the preceding claims, wherein a fold-over lip (17) continuously protrudes beyond the lateral surface of the seal rib (20) and transversal to the main plane (23) of the U-shaped circumferential seal rib (20), wherein the foldover lip in particular includes a cross section that terminates in a point or with a thin cross section, and the foldover lip (17) is sized, so that it contacts a first flank (22a) of the seal groove (22) in a tight manner with at least partial elastic deformation of the fold-over lip when the seal rib (20) is inserted in the seal groove (22).

13. The flap arrangement according to one of the preceding claims, wherein the fold-over lip (17) is integrally configured with the seal rib (20) and thus with the entire flap insert (11), and in particular formed from the same material.

14. The flap arrangement according to one of the preceding claims, wherein a stop cam (24) is rotationally fixated at an end of the flap arrangement, in particular on the terminal shaft (4), in particular applied or welded as a sheet metal component, which presses against a stop (25) in particular in a direction towards layer charging of the engine upon rotation of the terminal shaft, wherein the stop is configured in the intake manifold, in particular in the flap insert (11).

15. The flap arrangement according to one of the preceding claims, wherein the particular blades (2) in an unloaded condition of the tumble flap arrangement take rotational positions with respect to the pivot axis (10) that differ from one another and the tumble flap arrangement is only twisted, so that all blades assume the same rotational position with respect to the pivot axis (10) and press in particular against the blade stop (26) with a defined contact force, when a defined torque is applied through the drive element (18) and when the stop cam (24) provided at the upper end of the assembly contacts the stop (25).

16. The flap arrangement according to one of the preceding claims, wherein the blade stop (26) is made from a plate extending in flow direction transversally through the flow channel (15), wherein the plate is disposed in particular in the base portion (14) of the intake manifold.

17. A method for producing a tumble flap arrangement (1) including at least one blade (2), including a tumble flap (2a), and supported in a pair of support blocks (6a, 6b) of at least one flap insert (11), wherein
- the respective blade (2) is positioned in a defined manner in the flow channel (15) of the respective flap insert (11);
- the intermediary shaft (3) engaging the blade (2) and the terminal shaft (4) or the intermediary shafts (3, 3) engaging the blade (2), or the intermediary shaft (3) and the terminal drive shaft (5) engaging the blade (2) are respectively pushed from the outside through the respective bearing block (6a, 6b) of the flap insert (11) in axial direction up to the blade (2); and
- the blade (2) is fixated at the intermediary shafts (3) or terminal- and drive shafts (4, 5) contacting the blade (2).

18. The method according to one of the preceding method claims, wherein the connecting is performed through welding, in particular through a laser, and the welding is performed from the inside of the blade (2) and thus from the flow channel (15).

19. The method according to one of the preceding method claims, wherein the adjustment of the energy of the laser and/or the welding time is determined as a function of the thickness (D) of the blade (2) in the welding portion, and of the materials of the blade (2) and of the intermediary shaft (3) or of the terminal shafts (4, 5), so that the heating on the outside of the blade (2) in the contact portion between the blade (2) and the shaft (3, 4, 5) does not the damage the material of the bearing block (6a, 6b).

20. The method according to one of the preceding method claims, wherein the shafts (3, 4, 5) are pushed forward against the blade (2) until its front face is placed parallel to the inside of the blade (2).

21. The method according to one of the preceding method claims, wherein connecting or welding is performed in a rotational position of the blade (2) parallel to or in the wall of the flow channel (15), thus in the flap position for homogeneous operation.

22. The method according to one of the preceding method claims, wherein the connection of the blades (2) with the adjacent shafts (3, 4, 5) is continued at one end of the tumble flap arrangement (1) starting at one blade (2) and continuing to the next blade (2) and the connection terminates in particular with the driveshaft (5) and the placement of the drive element (18) onto the driveshaft (5).

23. The method according to one of the preceding method claims, wherein at least the bearing blocks (6), in particular respectively an entire flap insert (11) with two bearing blocks (6a, 6b) disposed thereon is integrally produced in one piece as a plastic injection molded component, and thus in particular the tolerance of the diameter (d') of the bearing bore hole in the bearing block (6) is ≤ 100 µm, in particular ≤ 30 µm.

24. The method according to one of the preceding method claims, wherein
- the bearing block (6) and/or the flap insert (11) are made from glass fiber reinforced plastic material, in particular glass fiber reinforced polyamide, or in particular
- the shafts (3, 4, 5) are made from solid round stock or tubular stock, in particular steel tubular stock, and cut to the desired particular lengths as a function of the distance of the particular cylinders.

25. The method according to one of the preceding method claims, wherein the U-shaped blades (2) are produced as a stamped and bent components from sheet material with constant thickness and the pass-through opening for inserting the shaft (3, 4, 5) is produced as a pass-through (7) or as a simple cutout or bore hole (8).

26. The method according to one of the preceding method claims, wherein at least one flat portion (9) of the round cross section is additionally fabricated at least at one location in the driveshaft (5), in particular pressed in or milled in for rotationally fixated connection with a drive element (18) through form locking.

## Revendications

1. Dispositif de volets, en particulier dispositif de volets générateurs de tourbillon avec plusieurs pales (2) qui contiennent les volets générateurs de tourbillons (2a) et plusieurs arbres intermédiaires (3) ainsi qu'un arbre d'extrémité (4) et un arbre moteur d'extrémité (5), au moins les arbres intermédiaires (3) étant logés dans des supports de palier (6) des inserts de volet (11) et les arbres intermédiaires (3), l'arbre d'extrémité (4) et l'arbre moteur d'extrémité (5) se composant de métal, en particulier d'acier, **caractérisé en ce que**
- les pales (2) se composent également de métal en particulier d'acier et les pales (2) ainsi que les arbres intermédiaires (3), l'arbre d'extrémité (4) et l'arbre moteur d'extrémité (5) sont reliés fixement, en particulier soudés entre eux,
- les supports de palier (6) des inserts de volets (11) sont réalisés comme des supports de palier (6) d'une seule pièce entourant le point de palier sans joints de séparation.

2. Dispositif de volets selon la revendication 1, **caractérisé en ce que** les supports de palier (6a, 6b)) se composent de matière synthétique et sont réalisés comme une pièce moulée par injection en plastique, en particulier en une seule pièce avec l'ensemble de l'insert de volet (11).

3. Dispositif de volets selon l'une des revendications précédentes, **caractérisé en ce que** les pales (2) sont réalisées en forme de U en vue latérale, avec une zone médiane qui représente le volet générateur de tourbillons (2a), et les branches d'extrémité (2b) librement en porte à faux, et en particulier l'ensemble de la pale (2) se compose de matière en tôle en particulier d'épaisseur constante.

4. Dispositif de volets selon l'une des revendications précédentes **caractérisé en ce que** les arbres intermédiaires (3) sont réalisés identiques en particulier de même longueur et se composent d'un rond massif ou creux, en particulier avec une surface étirée ou rectifiée en particulier de l'ajustement 48 ou 49.

5. Dispositif de volets selon l'une des revendications précédentes **caractérisé en ce que** l'arbre d'extrémité (4) est fabriqué à partir du même rond que l'arbre intermédiaire (3) mais simplement de longueur inférieure.

6. Dispositif de volets selon l'une des revendications précédentes **caractérisé en ce que** l'arbre moteur d'extrémité (5) se compose du même rond que l'arbre intermédiaire (3) et présente dans une section longitudinale définie au moins une coupe transversale déformée, en particulier un méplat (9).

7. Dispositif de volets selon l'une des revendications précédentes **caractérisé en ce que** les extrémités des arbres intermédiaires (3) respectivement les arbres d'extrémités (4, 5) sont logés dans des perçages entourant (8) ou des passages (7) des pales (2) ou sont logés dans les extrémités des branches libres d'extrémité (2b).

8. Dispositif de volets selon l'une des revendications précédentes **caractérisé en ce que**
- le diamètre (d) des arbres intermédiaires (3) respectivement des arbres d'extrémité (4, 5) est compris entre 3 mm et 10 mm, en particulier entre 5 mm et 8 mm pour un matériau plein,
- l'épaisseur (D) de la tôle des pales (2) est comprise entre 1 mm et 3 mm, en particulier entre 1,5 et 2,5 mm.

9. Dispositif de volets selon l'une des revendications précédentes **caractérisé en ce qu'**entre chacune des pales (2), il est prévu des arbres intermédiaires séparés (3) qui ne vont pas au-delà de la zone longitudinale des pales (2) mais se terminent au plus tard à la surface interne des pales (2).

10. Dispositif de volets selon l'une des revendications précédentes **caractérisé en ce que** les inserts de volet (11) présentent au moins sur une face à côté du canal d'écoulement (15) une nervure étanche (20) qui est transversale à la direction longitudinale (10), la direction des arbres (3, 4, 5) et traversent par l'extrémité avant ainsi que les deux faces parallèles s'étendant dans la direction d'insertion, et dans le tuyau d'aspiration, en particulier dans la partie inférieure (14) du tube d'aspiration, il est réalisé respectivement une gorge étanche circulaire (22) de forme analogue en U pour recevoir la nervure étanche (20).

11. Dispositif de volet selon la revendication 10, **caractérisé en ce que** la nervure étanche est réalisée sur la position longitudinale près d'une extrémité de l'insert de volet (11) en particulier dans la zone longitudinale du support de palier (6) et présente une largeur qui est inférieure à la largeur de l'insert de clapet (11), observé dans la direction longitudinale (10) des arbres.

12. Dispositif de volets selon l'une des revendications précédentes **caractérisé en ce que** comme la nervure étanche (20), une lèvre de rabat (17) fait saillie au-dessus de la surface latérale de la nervure étanche (20), transversalement au plan principal (23) de la nervure étanche (20) circulaire en forme de U et également au-dessus des trois faces, qui présente en particulier une section transversale s'effilant en pointe et est dimensionnée de sorte que lors de l'insertion de la nervure étanche (20) dans la gorge étanche (22), la lèvre de rabat (17) s'applique contre un flanc (22a) de la nervure étanche (22) en se déformant au moins partiellement.

13. Dispositif de volets selon l'une des revendications précédentes **caractérisé en ce que** la lèvre de rabat (17) est formée d'une seule pièce avec la nervure étanche (20) et ainsi de l'ensemble de l'insert de volet (11), et en particulier dans le même matériau.

14. Dispositif de volets selon l'une des revendications précédentes **caractérisé en ce qu'**à l'extrémité du dispositif de volet, en particulier sur l'arbre d'extrémité (4), une came de butée (24) est fixée fixe en rotation, en particulier placée sous forme d'une pièce en tôle et soudée, laquelle lors de la rotation de l'arbre d'extrémité se comprime en particulier en terme de mode charge stratifiée du moteur contre une butée (25) qui est ménagée dans le tuyau d'aspiration, en particulier dans l'insert de volet (11).

15. Dispositif de volets selon l'une des revendications précédentes **caractérisé en ce qu'**à l'état déchargé du dispositif de volets générateurs de tourbillon, les pales (2) prennent des positions de rotation différentes les unes des autres de manière définie par rapport à l'axe de pivotement (10) et pendant l'action d'un couple de rotation défini au moyen de l'élément moteur (18) et de manière appliquée de la came de butée (24) se trouvant sur l'autre extrémité du dispositif, le dispositif de volets générateurs de tourbillon est tordu contre la butée (25) de sorte que les pales prennent toutes la même position de rotation par rapport à l'axe de pivotement (10) et en particulier pressent contre une butée de pale (26) avec une force de compression définie.

16. Dispositif de volets selon l'une des revendications précédentes **caractérisé en ce que** la butée de pale (26) se compose d'une tôle s'étendant dans la direction d'écoulement transversalement au-dessus du canal d'écoulement (15), tôle qui est disposée en particulier dans la partie inférieure (14) du tuyau d'aspiration.

17. Procédé pour la fabrication d'un dispositif de volets générateurs de tourbillon (1) avec au moins une pale (2) qui comprend un volet générateur de tourbillons (2a) et qui est logée dans une paire de support de palier (6a, 6b) d'au moins un insert de volet (11),
- la pale respective (2) étant positionnée de manière définie dans le canal d'écoulement (15) de l'insert de clapet respectif (11),
- l'arbre intermédiaire (3) attaquant cette pale (2) et les arbres d'extrémité (4) ou les arbres intermédiaires (3, 3) attaquant cette pale (2) ou l'arbre intermédiaire (3) attaquant cette pale (2) et l'arbre moteur d'extrémité (5) sont poussées respectivement depuis l'extérieur par le support de palier respectif (6a, 6b) de l'insert de volet (11) axialement jusqu'à la pale (2) et
- les pales (2) sont reliées fixement aux arbres intermédiaires (3) respectivement aux arbres moteurs d'extrémité (4, 5) contactant ces dernières.

18. Procédé selon l'une des revendications de procédé précédentes, **caractérisé en ce que** la connexion est un soudage en particulier au moyen d'un laser et le soudage s'effectue depuis la face interne de la pale (2) et ainsi depuis le canal d'écoulement (15).

19. Procédé selon l'une des revendications de procédé précédentes, **caractérisé en ce que** le réglage de l'énergie du laser et/ou de la durée de soudage est réglée en fonction de l'épaisseur (D) de la pale (2) dans la zone de soudage ainsi qu'en fonction des matériaux de la pale (2) et de l'arbre intermédiaire (3) respectivement de l'arbre d'extrémité (4, 5), de sorte que le réchauffement sur la face externe de la pale n'endommage pas dans la zone de contact entre la pale (2) et l'arbre (3, 4, 5) le matériau du support de palier (6a, b).

20. Procédé selon l'une des revendications de procédé précédentes, **caractérisé en ce que** les arbres (3, 4, 5) sont poussés vers l'avant en direction de la pale (2) jusqu'à ce que leur surface avant frontale se trouve parallèle à la face interne de la pale (2).

21. Procédé selon l'une des revendications de procédé précédentes, **caractérisé en ce que** la connexion respectivement le soudage se produit dans une position de rotation de la pale (2) parallèlement respectivement dans la paroi du canal d'écoulement (15) donc dans la position de volet pour le mode homogène.

22. Procédé selon l'une des revendications de procédé précédentes, **caractérisé en ce que** la connexion des pales (2) avec les arbres adjacents (3, 4, 5) se poursuit sur une extrémité du dispositif de volets générateurs de tourbillon (1) en débutant depuis une pale (2) à la suivante et en particulier se termine avec l'arbre moteur d'extrémité (5) et le placement local de l'élément moteur (18).

23. Procédé selon l'une des revendications de procédé précédentes, **caractérisé en ce qu'**au moins les supports de palier (6), en particulier respectivement un insert de clapet entier (11) est fabriqué d'une seule pièce en tant que pièce moulée par injection en plastique avec les deux supports de palier (6a, b) disposés au-dessus et en particulier la tolérance du diamètre (d') du perçage de palier dans le support de palier (6) est ≤ 100 µm, en particulier ≤ 30 µm.

24. Procédé selon l'une des revendications de procédé précédentes, **caractérisé en ce que**
- le support de palier (6) et/ou l'insert de volet (11) est fabriqué à partir de matière plastique renforcée aux fibres de verre , en particulier en polyamide renforcé aux fibres de verre, ou en particulier
- les arbres (3, 4, 5) sont fabriqués à partir de ronds et de tubes en particulier en acier, ainsi qu'avec des sections aux longueurs souhaitées, en fonction de la distance de chacun des cylindres.

25. Procédé selon l'une des revendications de procédé précédentes, **caractérisé en ce que** les pales (2) en forme de U sont fabriquées en tant que pièce découpée et pliée en tôle d'épaisseur homogène et l'ouverture de passage pour l'insertion de l'arbre (3, 4, 5) est réalisée en tant que passage (7) ou simple découpe respectivement perçage (8).

26. Procédé selon l'une des revendications de procédé précédentes, **caractérisé en ce qu'**il est prévu dans l'arbre moteur d'extrémité (5) en supplément au moins un méplat (9) de la section transversale ronde à au moins un endroit en particulier fraisé ou pressé pour une connexion fixe en rotation avec un élément moteur (18) par adhérence de forme.
